# EUROPÄISCHE PATENTSCHRIFT

(11) **EP 1 748 533 B1**
(45) Veröffentlichungstag und Bekanntmachung des Hinweises auf die Patenterteilung: **01.09.2010**
(21) Anmeldenummer: 05016577.8
(22) Anmeldetag: 29.07.2005
(51) Int. Cl.: H02K 1/27

(54) **Permanentmagnetrotor für eine bürstenlose elektrische Maschine**
Rotor with permanent magnets for a brushless electric machine
Rotor à aimants permanents pour machine électrique sans balais

(43) Veröffentlichungstag der Anmeldung: 31.01.2007
(73) Patentinhaber: SIEMENS AKTIENGESELLSCHAFT, 80333 München (DE)
(72) Erfinder: Drexlmaier, Thomas, 97072 Würzburg (DE)

(56) Entgegenhaltungen:
- DE-A1- 19 951 594
- DE-U1- 20 201 831
- FR-A- 2 650 713
- US-A1- 2004 189 129
- US-A1- 2004 189 140
- US-B1- 6 220 826

## Beschreibung

Die Erfindung betrifft einen Permanentmagnetrotor für eine bürstenlose elektrische Maschine.

Aus der DE 196 01 271 A1 ist bereits ein Magnetpolrotor bekannt, der eine Mehrzahl von Magnetpolen aufweist, die auf der Zylinderaußenfläche eines Basisringes des Rotors angeordnet sind. Die Magnetpole sind in einen Kunststoffring eingebettet, bei dem es sich um ein Spritzgussteil handelt. Der Kunststoffring ist auf die Zylinderaußenfläche des Basisringes aufgepresst. Zur Sicherung gegen ein Verschieben des Kunststoffringes auf der Zylinderaußenfläche des Basisringes ist ein Käfigring vorgesehen, der den Kunststoffring übergreift.

Aus der DE 199 42 029 A1 ist ein Permanentmagnetrotor für einen bürstenlosen Elektromotor bekannt, bei welchem der Permanentmagnetrotor einen zylindrischen lamellierten Rotorkörper aufweist. Dieser ist mit der Rotorwelle fest verbunden und weist längs des Zylinderumfangs angeordnete segmentförmige Permanentmagnete auf. Diese sind durch Befestigungsmittel gegen den Zylinderumfang des Rotorkörpers drück- und arretierbar. Bei den Befestigungsmitteln handelt es sich um federnde Halteklammern.

Aus der GB 2 275 134 A ist ein Permanentmagnetrotor für einen elektrischen Motor bekannt, welcher einen Rotorbasiskörper mit einem zylindrischen Außenumfang aufweist. Auf dem Außenumfang dieses Rotorbasiskörpers ist eine Vielzahl von Permanentmagneten angebracht, wobei die Permanentmagnete voneinander beabstandet sind. Weiterhin ist eine vergossene Umhüllung aus Kunststoffmaterial oder Harz vorgesehen, die den Außenumfang der Permanentmagnete bedeckt und die Lücken zwischen den Permanentmagneten füllt. Die vergossene Umhüllung, die ihrerseits mit permanentmagnetischem Material versehen ist, dient der Befestigung der Permanentmagnete am Rotor und zur Herbeiführung von nur graduellen Veränderungen des Magnetflusses zwischen in Umfangsrichtung benachbarten Magneten.

Aus der WO 00/74209 A1 ist ein Rotor für einen bürstenlosen Motor bekannt, bei welchem ein Schrumpfschlauch zur Fixierung der Magnetsegmente des Rotors vorgesehen ist. Beim Zusammensetzen dieses Rotors werden zunächst die Magnetsegmente lose in einen Käfig eingelegt. Danach kann ein Rotorkern axial in den radialen Innenbereich der insgesamt ringförmig angeordneten Magnetsegmente eingeschoben werden. Die Fixierung der Magnetsegmente erfolgt mittels des oben genannten Schrumpfschlauches. Dieser liegt ursprünglich in Form einer Hülse vor, die aus sich bei Hitze zusammenziehendem Material besteht und die in Axialrichtung über die Magnetsegmente geschoben wird. Wird an diese Hülse die erforderliche Temperatur angelegt, die vorzugsweise im Bereich zwischen 100°C und 200°C liegt, dann zieht sich die Hülse zu einem Schrumpfschlauch zusammen, der die Magnetsegmente am Rotor fixiert.

Aus der DE 199 51 594 A1 ist ein Rotor für einen Elektromotor bekannt. Dieser Rotor weist eine Anzahl Magnete, einen Rückschlussring und eine Rotorwelle, die mit dem Rotor drehfest ist, auf. Weiterhin enthält der Rotor einen Träger, der drehfest auf der Rotorwelle angebracht ist. Der Träger weist Ausnehmungen auf, in denen die Magnete einliegen. Der Träger trägt den Rückschlussring und ist weiterhin mit Federelementen versehen, die federnd gegen die Magnete drücken und diese dadurch spielfrei in den Ausnehmungen des Trägers halten. Bei dem Träger handelt es sich um ein Kunststoffteil.

Der Erfindung liegt die Aufgabe zugrunde, einen Permanentmagnetrotor für eine bürstenlose elektrische Maschine anzugeben, welcher schnell und einfach herstellbar ist und bei dessen Verwendung in einer bürstenlosen elektrischen Maschine der Abstand zwischen dem Rotor und dem Stator klein gehalten werden kann.

Diese Aufgabe wird durch einen Permanentmagnetrotor mit den im Anspruch 1 angegebenen Merkmalen gelöst. Vorteilhafte Ausgestaltungen und Weiterbildungen der Erfindung ergeben sich aus den abhängigen Patentansprüchen.

Die Vorteile der Erfindung bestehen insbesondere darin, dass durch das passgenaue Einsetzen der Permanentmagnete in den Kunststoffkäfig eine exakte Positionierung der Permanentmagnete auf dem Rotor gewährleistet ist. Insbesondere ist sichergestellt, dass die Permanentmagnete einen gleichmäßigen Abstand voneinander aufweisen. Weiterhin kann der Zusammenbau bzw. die Montage eines Permanentmagnetrotors gemäß der Erfindung schnell und einfach erfolgen. Dies verkürzt die Zykluszeiten in der Fabrik. Ferner erlaubt ein Permanentmagnetrotor gemäß der Erfindung im späteren Betrieb eine einfache Prozessüberwachung, da er zu Prüfungszwecken nicht zerstört werden muss. Weiterhin ist durch die schwalbenschwanzförmigen Aufnahmen des Kunststoffkäfigs sichergestellt, dass die Permanentmagnete im Betrieb des Rotors am Rotor fixiert sind und sich nicht von diesem lösen können. Zu dieser Fixierung ist kein weiteres Element notwendig, welches zwischen den Permanentmagneten und dem Stator der Maschine angeordnet ist. Folglich kann bei einem Permanentmagnetrotor gemäß der Erfindung der Abstand zwischen dem Außenumfang des Rotors und dem Innenumfang des Stators, in welchem der Rotor drehbeweglich gelagert ist, klein sein.

Durch die zwischen benachbarten Permanentmagneten vorgesehenen Kunststoffstege wird in vorteilhafter Weise erreicht, dass der Abstand zwischen benachbarten Permanentmagneten durch Kunststoff geschlossen ist. Dadurch wird vermieden, dass im Betrieb der Maschine störende Laufgeräusche auftreten, die beispielsweise durch Luftabrisse entstehen könnten. Weiterhin sind die Permanentmagnete an ihren Kanten im Bereich der Außenflächen gegen Beschädigung geschützt. Ferner wird erreicht, dass der Wirkungsgrad des Elektromotors vergrößert ist, da zwischen den Permanentmagneten keine metallischen Brücken vorhanden sind und da - wie bereits ausgeführt wurde - der Abstand des Rotors zum Stator klein gewählt werden kann.

Der Kunststoffkäfig weist, wie es im Anspruch 1 desweiteren angegeben ist, zwei in Axialrichtung voneinander beabstandete Ringe auf, die durch die Stege miteinander verbunden sind. Dadurch wird für den Kunststoffkäfig nur wenig Kunststoffmaterial benötigt, was die Herstellungskosten weiter reduziert. Weiterhin dient in vorteilhafter Weise der erste Ring als Anschlagfläche für den Rückschlussring und der zweite Ring als Anschlagfläche für die Permanentmagneten. Dadurch ist der Zusammenbau des Permanentmagnetrotors weiter vereinfacht.

Weitere vorteilhafte Eigenschaften der Erfindung ergeben sich aus deren beispielhafter Erläuterung anhand der Figuren. Es zeigt
- Figur 1: Darstellungen zur Erläuterung eines Permanentmagnet- rotors gemäß der Erfindung,
- Figur 2: Skizzen, in welchen Bestandteile des Permanentmagnet- rotors perspektivisch dargestellt sind, und
- Figur 3: Längsschnittsdarstellungen eines Permanentmagnetro- tors gemäß der Erfindung.

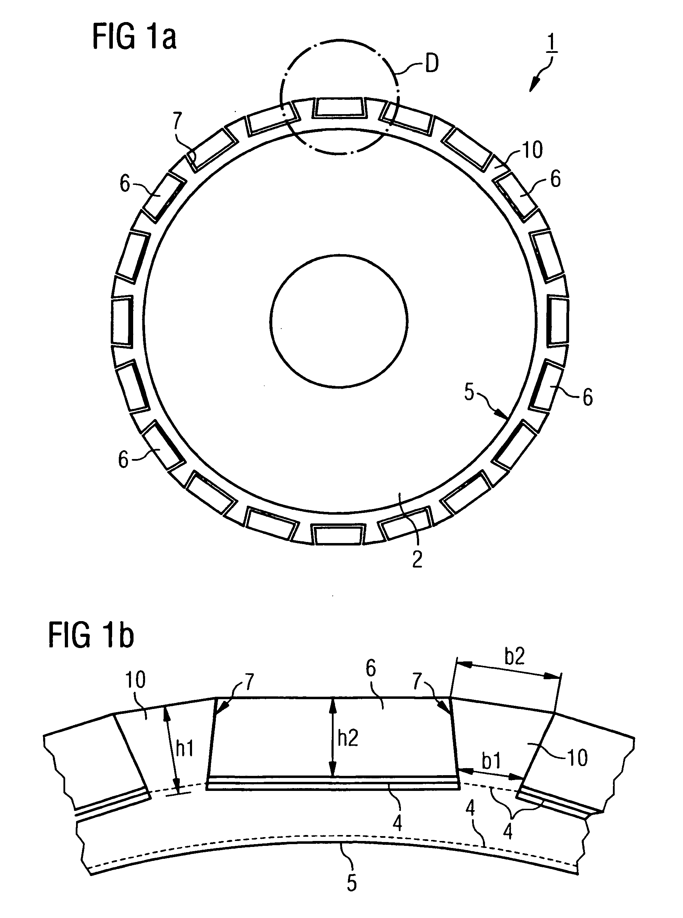

Die Figur 1a zeigt eine Darstellung zur Erläuterung eines Permanentmagnetrotors gemäß der Erfindung. Der dargestellte Permanentmagnetrotor 1 weist eine Rotorwelle 2 auf, die als hohlzylindrische Rotorwelle realisiert ist. Die Rotorwelle 2 dient als Träger für einen Kunststoffkäfig 5, in welchen in Axialrichtung ein in der Figur 1a nicht sichtbarer Rückschlussring 4 sowie Permanentmagnete 6 eingeschoben sind. Dieser Rückschlussring 4 hat die Aufgabe, den durch die Permanentmagnete 6 laufenden magnetischen Kreis zu schließen. Weiterhin trägt er dazu bei, dass die Permanentmagnete spielfrei zwischen dem Kunststoffkäfig 5 und dem Rückschlussring 4 verpresst sind.

Der Kunststoffkäfig 5 enthält eine Vielzahl von in Radialrichtung nach außen abstehenden Stegen 10, die zusammen mit weiteren Bestandteilen des Kunststoffkäfigs schwalbenschwanzförmige Aufnahmen für die Permanentmagnete 6 bilden.

Das in der Figur 1a gestrichelt gezeichnete Detail D ist in der Figur 1b vergrößert dargestellt. Aus dieser vergrößerten Darstellung ist ersichtlich, dass die im Kunststoffkäfig 5 vorgesehenen Aufnahmen 7 schwalbenschwanzförmig geformt sind und dass die in diese Aufnahmen eingeschobenen Permanentmagnete 6 derart trapezförmig geformt sind, dass sie passgenau in die Aufnahmen eingesetzt werden können.

Die Höhe h1 der Kunststoffstege 10 ist geringfügig größer als die Höhe h2 der Permanentmagnete, so dass einander benachbarte Permanentmagnete über ihren gesamten Höhenbereich durch den dazwischen angeordneten Kunststoffsteg voneinander getrennt sind. Die Breite b1 der Kunststoffstege 10 im Bereich der in Radialrichtung inneren Endbereiche der Permanentmagnete ist kleiner als die Breite b2 der Kunststoffstege 10 im Bereich der in Radialrichtung äußeren Endbereiche der Permanentmagnete.

In ihrem in Axialrichtung mittleren Bereich liegen die Permanentmagnete 6 direkt auf dem in der Figur 1b gezeigten Rückschlussring 4 auf, der in Axialrichtung hinter der ringförmigen vorderen Abschlussfläche des Kunststoffkäfigs 5 positioniert ist.

Weiterhin ist aus der Figur 1b ersichtlich, dass die radialen Außenflächen der Stege 10 und die radialen Außenflächen der Permanentmagnete 6 bündig ineinander übergehen. Insgesamt bilden die radialen Außenflächen der Stege 10 und die radialen Außenflächen der Permanentmagnete 6 eine geschlossene Außenfläche des Permanentmagnetrotors. Die Lücken zwischen einander benachbarten Permanentmagneten 6 sind vollständig mit dem Kunststoffmaterial der zwischen den Permanentmagneten vorgesehenen Stege 10 gefüllt. Dadurch wird in vorteilhafter Weise erreicht, dass im Betrieb des Rotors keine störenden Laufgeräusche auftreten. Weiterhin sind die Außenkanten der Permanentmagnete vor einer Beschädigung im Betrieb geschützt, da sie nicht in den Luftspalt zwischen dem Stator und dem Rotor überstehen.

Ferner wird durch die schwalbenschwanzförmigen Aufnahmen des Kunststoffkäfigs 5 und die trapezförmige Formung der Permanentmagnete 6 eine passgenaue Anordnung der Permanentmagnete im Kunststoffkäfig sichergestellt. Dadurch wird erreicht, dass sich auch bei einer schnellen Drehung des Rotors die Permanentmagnete nicht vom Rotor ablösen können, den Luftspalt zwischen Rotor und Stator nicht überbrücken können und auch die elektrische Maschine nicht beschädigen oder gar zerstören können.

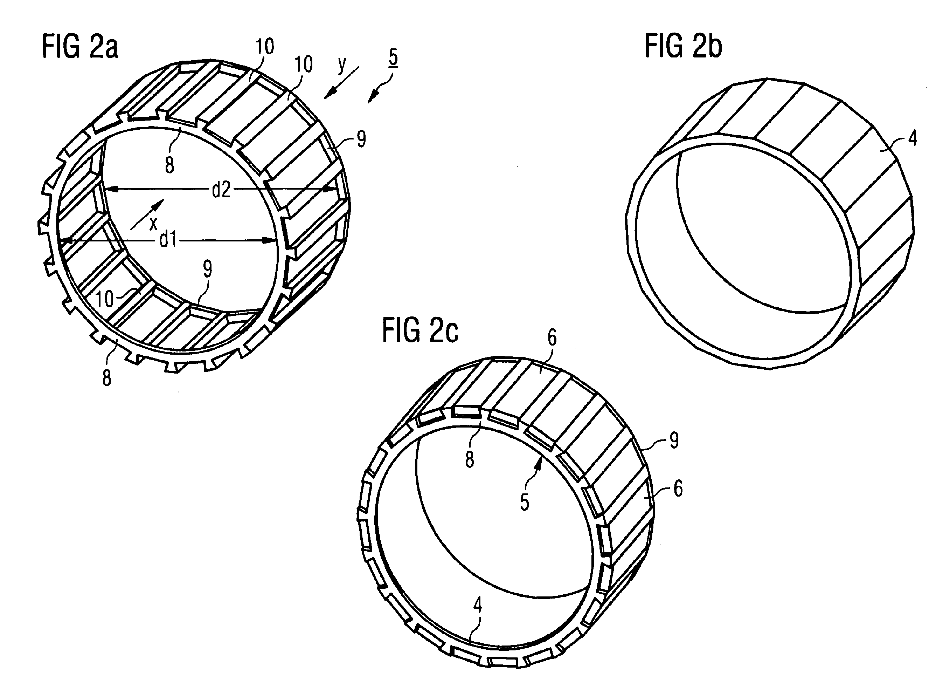

Die Figur 2 zeigt Bestandteile des in der Figur 1 dargestellten Permanentmagnetrotors in perspektivischer Darstellung. Dabei ist in der Figur 2a der insgesamt hohlzylindrisch gestaltete Kunststoffkäfig 5 gezeigt, in welchen beim Zusammenbau des Rotors die Permanentmagnete und der Rückschlussring eingeschoben werden. Der Kunststoffkäfig 5 weist einen ersten Ring 8 und einen von diesem in Axialrichtung beabstandeten zweiten Ring 9 auf. Diese beiden Ringe sind durch die in Axialrichtung verlaufenden Stege 10 miteinander verbunden. Die Stege bilden zusammen mit den Ringen schwalbenschwanzförmige Aufnahmen für die Permanentmagnete. Der Durchmesser d1 des ersten Ringes 8 ist kleiner als der Durchmesser d2 des zweiten Ringes 9. Die Permanentmagnete werden in Richtung des Pfeiles x in die schwalbenschwanzförmigen Aufnahmen des Kunststoffkäfigs 5 eingeschoben, wobei die Innenfläche des Ringes 9 als Anschlagfläche für die Permanentmagnete dient.

In der Figur 2b ist der Rückschlussring 4 perspektivisch dargestellt. Da die Form der Permanentmagnete vorzugsweise quaderförmig ist, so dass die radiale Innenfläche und die radiale Außenfläche der Permanentmagnete jeweils rechteckförmig ist, ist die Außenfläche des Rückschlussringes in Umfangsrichtung abschnittsweise geradlinig. Da weiterhin der Außenradius des Rückschlussringes 4 dem Innenradius des Ringes 9 des Kunststoffkäfigs 5 entspricht, kann der Rückschlussring 4 in den Kunststoffkäfig 5 mit bereits eingesetzten Permanentmagneten 6 in Richtung des Pfeiles y (Figur 2a) passgenau eingeschoben werden. Dabei dient die Innenfläche des Ringes 8 als Anschlagfläche für den Rückschlussring 4. Ist der Rückschlussring 4 in den Kunststoffkäfig 5 eingeschoben, dann liegen die Permanentmagnete direkt auf dem Rückschlussring 4 auf und sind spielfrei zwischen dem Kunststoffkäfig und dem Rückschlussring verklemmt.

Die Figur 2c zeigt eine perspektivische Darstellung des Kunststoffkäfigs 5 mit eingeschobenen Permanentmagneten 6 und eingeschobenem Rückschlussring 4.

Im Betrieb des Rotors tritt auch bei großen Belastungen keine unerwünschte Verdrehung in Umfangsrichtung zwischen Rückschlussring 4, Kunststoffkäfig 5 und den in dessen Aufnahmen eingesetzten Permanentmagneten 6 auf.

Die in der Figur 2c gezeigte Einheit, bestehend aus dem Kunststoffkäfig 5, den Permanentmagneten 6 und dem Rückschlussring 4 wird auf die Rotorwelle 2 aufgeschoben und an dieser befestigt.

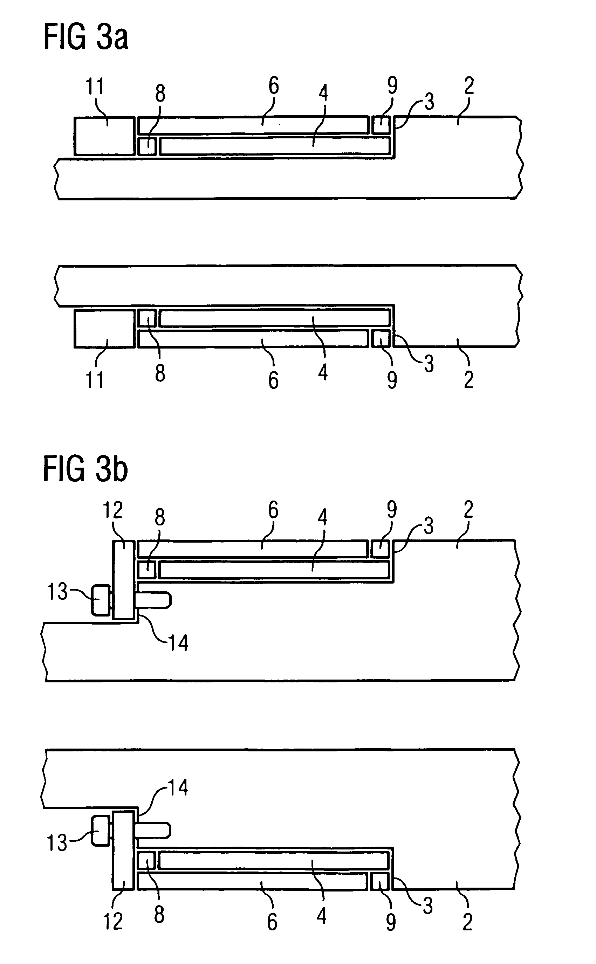

Gemäß einer ersten Ausführungsform, die in der Figur 3a gezeigt ist, geschieht dies wie folgt:

Die Rotorwelle 2 ist als Hohlwelle ausgeführt, die an ihrem Außenumfang mit einer Stufe 3 versehen ist. Die in der Figur 2c gezeigte Einheit wird auf die Rotorwelle aufgeschoben, wobei die Stufe 3 der Rotorwelle als axiale Anschlagfläche für die genannte Einheit dient. Es ist ersichtlich, dass der Ring 9 und eine der axialen Abschlussflächen des Rückschlussringes 4 direkt an der Stufe 3 anliegen. Der Ring 8 und eine Abschlussfläche der Permanentmagnete 6 werden mittels einer Überwurfmutter 11 an der Rotorwelle 2 befestigt.

Insgesamt entsteht folglich ein schnell und einfach zu fertigender Permanentmagnetrotor, der im Betrieb laufruhig und laufsicher ist. Ist ein derartiger Permanentmagnetrotor in einer bürstenlosen elektrischen Maschine drehbeweglich in einem Stator mit geringem Abstand zu diesem angeordnet, dann arbeitet die Maschine mit einem hohen Wirkungsgrad.

Gemäß einer zweiten Ausführungsform, die in der Figur 3b gezeigt ist, ist die Rotorwelle 2 ebenfalls als Hohlwelle ausgeführt. Diese weist neben einer ersten Stufe 3 eine zweite Stufe 14 auf. Die in der Figur 2c gezeigte Einheit, bestehend aus dem Kunststoffkäfig 5, den Permanentmagneten 6 und dem Rückschlussring 4, wird auf diese Rotorwelle 2 derart aufgeschoben, dass die erste Stufe 3 als axiale Anschlagfläche für die genannten Einheit dient. Es ist ersichtlich, dass der Ring 9 und eine axiale Abschlussfläche des Rückschlussringes 4 direkt an der Stufe 3 anliegen. Der Ring 8 und eine Abschlussfläche der Permanentmagnete 6 gehen bündig in die genannte zweite Stufe 14 über und liegen an einer auf die Rotorwelle 2 geschobenen Befestigungsplatte 12 an. Diese ist unter Verwendung von Schrauben 13, die durch die Befestigungsplatte 12 geführt sind, an der Rotorwelle 2 befestigt.

Auch hierbei entsteht insgesamt ein schnell und einfach zu fertigender Permanentmagnetrotor, der im Betrieb laufruhig und laufsicher ist. Ist dieser Permanentmagnetrotor in einer bürstenlosen elektrischen Maschine drehbeweglich in einem Stator mit geringem Abstand zu diesem angeordnet, dann arbeitet die Maschine mit hohem Wirkungsgrad.

## Patentansprüche

1. Permanentmagnetrotor für eine bürstenlose elektrische Maschine, mit
- einer Rotorwelle (2) und
- einem zylinderförmigen Kunststoffkäfig (5), in welchen Permanentmagnete (6) eingeschoben sind, wobei
- der Kunststoffkäfig schwalbenschwanzförmige Aufnahmen (7) aufweist,
- der Kunststoffkäfig (5) zwei in Axialrichtung voneinander beabstandete Ringe (8, 9) aufweist,
- die Permanentmagnete (6) trapezförmig geformt und passgenau in die schwalbenschwanzförmigen Aufnahmen eingeschoben sind,
- der Kunststoffkäfig (5) zwischen jeweils benachbarten Permanentmagneten (6) einen Steg (10) aufweist und die Permanentmagnete (6) mit den Stegen (10) und einem Rückschlussring (4) spielfrei verklemmt sind und
- die in Axialrichtung voneinander beabstandeten Ringe (8, 9) durch die Stege (10) miteinander verbunden sind,
**dadurch gekennzeichnet, dass** der Innendurchmesser (d1) des ersten Ringes (8) kleiner ist als der Innendurchmesser (d2) des zweiten Ringes (9).

2. Permanentmagnetrotor nach Anspruch 1, **dadurch gekennzeichnet, dass** die Höhe (h1) der Stege (10) geringfügig größer ist als die Höhe (h2) der Permanentmagnete (6).

3. Permanentmagnetrotor nach einem der vorhergehenden Ansprüche, **dadurch gekennzeichnet, dass** die Breite (b1) der Stege im Bereich der in Radialrichtung inneren Endbereiche der Permanentmagnete kleiner ist als die Breite (b2) der Stege im Bereich der in Radialrichtung äußeren Endbereiche der Permanentmagnete.

4. Permanentmagnetrotor nach einem der vorhergehenden Ansprüche, **dadurch gekennzeichnet, dass** die Außenflächen der Stege (10) und die Außenflächen der Permanentmagnete (6) bündig ineinander übergehen.

5. Permanentmagnetrotor nach einem der vorhergehenden Ansprüche, dass die Permanentmagnete (6) eine rechteckförmige Außenfläche aufweisen.

6. Permanentmagnetrotor nach einem der vorhergehenden Ansprüche, **dadurch gekennzeichnet, dass** die Außenflächen der Stege (10) und die Außenflächen der Permanentmagnete (6) eine geschlossene Außenfläche des Permanentmagnetrotors bilden.

7. Permanentmagnetrotor nach einem der vorhergehenden Ansprüche, **dadurch gekennzeichnet, dass** der erste Ring (8) als axiale Anschlagfläche für den Rückschlussring (4) dient.

8. Permanentmagnetrotor nach einem der vorhergehenden Ansprüche, **dadurch gekennzeichnet, dass** der zweite Ring (9) als axiale Anschlagfläche für die Permanentmagnete (6) dient.

9. Permanentmagnetrotor nach einem der vorhergehenden Ansprüche, **dadurch gekennzeichnet, dass** die Rotorwelle (2) mit einer Stufe (3) versehen ist und diese Stufe als Anschlagfläche für einen axialen Endbereich des Kunststoffkäfigs mit eingeschobenen Magneten und eingeschobenem Rückschlussring dient.

10. Permanentmagnetrotor nach Anspruch 9, **dadurch gekennzeichnet, dass** der andere Endbereich des Kunststoffkäfigs mit eingeschobenen Magneten und eingeschobenem Ruckschlussring mittels einer Überwurfmutter (11) an der Rotorwelle (2) fixiert ist.

11. Permanentmagnetrotor nach Anspruch 9, **dadurch gekennzeichnet, dass** die Rotorwelle (2) mit einer zweiten Stufe (14) versehen ist, der andere Endbereich des Kunststoffkäfigs mit eingeschobenen Magneten und eingeschobenem Rückschlussring an einer Befestigungsplatte (12) anliegt und die Befestigungsplatte (12) mittels Befestigungsschrauben (13) an der Rotorwelle (2) befestigt ist.

## Claims

1. Permanent magnet rotor for a brushless electrical machine, having
- a rotor shaft (2) and
- a cylindrical plastic cage (5) in which permanent magnets (6) are inserted, it being the case that
- the plastic cage has dovetailed retainers (7) and
- the plastic cage (5) has two rings (8, 9) spaced apart from each other in the axial direction,
- the permanent magnets (6) are trapezoidal in shape and are inserted so as to fit tightly in the dovetailed retainers,
- the plastic cage (5) has a web (10) between each pair of adjacent permanent magnets (6) and the permanent magnets (6) are clamped with no play by the webs (10) and a return ring (4) and
- the rings (8, 9) spaced apart from one another in the axial direction are connected to one another by means of webs (10),
**characterised in that** the internal diameter (d1) of the first ring (8) is smaller than the internal diameter (d2) of the second ring (9).

2. Permanent magnet rotor according to claim 1, **characterised in that** the height dimension (h1) of the webs (10) is slightly larger than the height dimension (h2) of the permanent magnets (6).

3. Permanent magnet rotor according to one of the preceding claims, **characterised in that** the width dimension (b1) of the webs in the region of the inner end area, as viewed in the radial direction, of the permanent magnets is smaller than the width dimension (b2) of the webs in the region of the outer end area, as viewed in the radial direction, of the permanent magnets.

4. Permanent magnet rotor according to one of the preceding claims, **characterised in that** the exterior faces of the webs (10) and the exterior faces of the permanent magnets (6) meet flush with one another.

5. Permanent magnet rotor according to one of the preceding claims, **characterised in that** the permanent magnets (6) have a rectangular exterior face.

6. Permanent magnet rotor according to one of the preceding claims, **characterised in that** the exterior faces of the webs (10) and the exterior faces of the permanent magnets (6) form a continuous exterior face of the permanent magnet rotor.

7. Permanent magnet rotor according to one of the preceding claims, **characterised in that** the first ring (8) serves as an axial stopping surface for the return ring (4).

8. Permanent magnet rotor according to one of the preceding claims, **characterised in that** the second ring (9) serves as an axial stopping surface for the permanent magnets (6).

9. Permanent magnet rotor according to one of the preceding claims, **characterised in that** the rotor shaft (2) is provided with a step (3) and this step serves as a stopping surface for an axial end region of the plastic cage with magnets and return ring inserted.

10. Permanent magnet rotor according to claim 9, **characterised in that** the other end region of the plastic cage with magnets and return ring inserted is fixed to the rotor shaft (2) using a coupling nut (11).

11. Permanent magnet rotor according to claim 9, **characterised in that** the rotor shaft (2) is provided with a second step (14), the other end region of the plastic cage with magnets and return ring inserted rests against a mounting plate (12) and the mounting plate (12) is attached to the rotor shaft (2) using fastening screws (13).

## Revendications

1. Rotor à aimants permanents pour un moteur électrique sans balais, comprenant
- un arbre ( 2 ) de rotor et
- une cage ( 5 ) cylindrique en matière plastique, dans laquelle sont insérés des aimants ( 6 ) permanents, dans lequel
- la cage en matière plastique a des logements ( 7 ) en forme de queue d'aronde,
- la cage ( 5 ) en matière plastique a deux anneaux ( 8, 9 ) à distance l'un de l'autre dans la direction axiale,
- les aimants ( 6 ) permanents sont en forme de trapèze et sont insérés, d'une manière exactement adaptée, dans les logements en queue d'aronde,
- la cage ( 5 ) en matière plastique a entre deux aimants ( 6 ) une barrette ( 10 ) et les aimants ( 6 ) sont coincés sans jeu par les barrettes ( 10 ) et un anneau ( 4 ) de retour et,
- les anneaux ( 8, 9 ) à distance l'un de l'autre dans la direction axiale sont reliés entre eux par les barrettes ( 10 ),
- **caractérisé en ce que** le diamètre ( d1 ) intérieur du premier anneau ( 8 ) est plus petit que le diamètre ( d2 ) intérieur du deuxième anneau ( 9 ).

2. Rotor à aimants permanents suivant la revendication 1,
**caractérisé en ce que**
la hauteur ( h1 des barrettes ( 10 ) est légèrement plus grande que la hauteur ( h2 ) des aimants ( 6 ) permanents.

3. Rotor à aimants permanents suivant l'une des revendications précédentes,
**caractérisé en ce que**
la largeur ( b1 ) des barrettes dans la zone des parties d'extrémité intérieures dans la direction radiale des aimants permanents est plus petite que la largeur ( b2 ) des barrettes dans la zone des parties d'extrémité extérieures dans la direction axiale des aimants permanents.

4. Rotor à aimants permanents suivant l'une des revendications précédentes,
**caractérisé en ce que**
les surfaces extérieures des barrettes ( 10 ) et les surfaces extérieures des aimants ( 6 ) permanents sont à affleurement.

5. Rotor à aimants permanents suivant l'une des revendications précédentes,
**caractérisé en ce que**
les aimants ( 6 ) permanents ont une surface extérieure rectangulaire.

6. Rotor à aimants permanents suivant l'une des revendications précédentes,
**caractérisé en ce que**
les surfaces extérieures des barrettes ( 10 ) et les surfaces extérieures des aimants ( 6 ) permanents forment une surface extérieure fermée du rotor à aimants permanents.

7. Rotor à aimants permanents suivant l'une des revendications précédentes,
**caractérisé en ce que**
le premier anneau ( 8 ) sert de surface axiale de butée pour l'anneau ( 4 ) de retour.

8. Rotor à aimants permanents suivant l'une des revendications précédentes,
**caractérisé en ce que** le deuxième anneau ( 9 ) sert de surface axiale de butée pour les aimants ( 6 ) permanents.

9. Rotor à aimants permanents suivant l'une des revendications précédentes,
**caractérisé en ce que**
l'arbre ( 2 ) du rotor est pourvu d'un épaulement ( 3 ), cet épaulement sert de surface de butée pour une partie d'extrémité axiale de la cage en matière plastique ayant des aimants insérés et un anneau de retour inséré.

10. Rotor à aimants permanents suivant la revendication 9,
**caractérisé en ce que**
l'autre partie d'extrémité de la cage en matière plastique, ayant des aimants insérés et un anneau de retour insérés, est immobilisée sur l'arbre ( 2 ) du rotor au moyen d'un écrou ( 11 ) d'accouplement.

11. Rotor à aimants permanents suivant la revendication 9,
**caractérisé en ce que**
l'arbre ( 2 ) du rotor est pourvu d'un deuxième épaulement ( 14 ) qui applique une autre partie d'extrémité de la cage en matière plastique ayant des aimants insérés et un anneau de retour inséré sur une plaque ( 12 ) de fixation et la plaque ( 12 ) de fixation est fixée à l'arbre ( 2 ) du rotor au moyen de vis ( 13 ) de fixation.
